Europäisches Patentamt

European Patent Office

Office européen des brevets

(19)

(11) Numéro de publication: **0 105 819**
**A1**

(12) # DEMANDE DE BREVET EUROPEEN

(21) Numéro de dépôt: **83440049.1**

(22) Date de dépôt: **06.10.83**

(51) Int. Cl.³: **B 63 B 1/38**

(30) Priorité: **06.10.82 FR 8216846**

(43) Date de publication de la demande:
**18.04.84 Bulletin 84/16**

(84) Etats contractants désignés:
**AT BE CH DE FR GB IT LI LU NL SE**

(71) Demandeur: **ATELIERS ET CHANTIERS DE LA MANCHE**
**Rue Charles Bloud, B.P.1006**
**F-76205 Dieppe(FR)**

(72) Inventeur: **Macoin, Pierre**
**15 rue des Vosges**
**F-67560 Rosheim(FR)**

(72) Inventeur: **Dohen, Alfred**
**16 rue Jules Ferry**
**F-35400 Saint Malo(FR)**

(74) Mandataire: **Bossard, Jacques-René**
**CABINET ARBOUSSE BASTIDE 20 rue de Copenhague**
**F-67000 Strasbourg(FR)**

(54) **Bateau rapide.**

(57) Bateau rapide à moteur comportant une carène, dont le fond (5) présente sur la plus grande partie de sa longueur, un profil transversal en forme de voûte écrasée (17), ce fond comportant sur la plus grande partie de sa longueur une série de redans (10,11,12,13), la plus grande partie de ces redans présentant sur leur face arrière, une ou plusieurs ouvertures éventuellement subdivisées dont chacune communique de façon étanche avec l'air atmosphérique, les deux côtés de bateau étant prolongés vers le bas par une jupe (15,16) dont la hauteur est sensiblement égale à celle des redans, et sensiblement parallèles entre elles.

FIG. 1

EP 0 105 819 A1

-1-

# DISPOSITIF DE PROPULSION ET DE DIRECTION D'UN NAVIRE.

La présente invention concerne l'amélioration des performances des bateaux rapides à moteur, et elle vise une combinaison de caractéristiques de construction applicables aux bateaux rapides à propulsion avant ou traditionnelle, destinés à en améliorer les performances, c'est-à-dire à en accroître la vitesse pour une puissance et/ou la consommation de leur moteur pour atteindre et conserver une vitesse donnée.

Par "bateaux rapides", on désigne dans le présent brevet les embarcations rapides à destination civile, telle que la pêche, la plaisance, le transport des passagers ou de marchandises, aussi bien que les navires de diverses tailles à destination militaire de surveillance ou d'assistance, les navires de transport et de débarquement de matériel et de personnel, les patrouilleurs, les engins d'attaque et d'intervention rapide, cette énumération n'étant d'ailleurs pas limitative, mais illustrant au contraire quelques exemples seulement du très vaste champ d'application de l'invention.

Outre la résistance due aux formes de carenes , la cause essentielle du rendement relativement faible des types de bateaux classiques réside dans la surface importante de contact de la coque avec l'eau, dont les frottements impliquent une perte d'énergie considérée comme inéluctable.

Ces frottements résultent du contact effectif de l'eau avec ce que l'on nomme la "surface mouillée" de la coque, et tous les efforts pour résoudre ce problème devaient tendre à créer entre la coque et l'eau une couche d'air éliminant ce contact.

Or si l'on écarte bien entendu les engins se déplaçant sur un épais "matelas" d'air refoulé sous le fond de la coque et emprisonné par une jupe épousant la périphérie de l'engin, et qui ne peuvent en fait plus être considérés comme des bateaux, puisque se déplaçant indifféremment complètement au-dessus de l'eau ou de la terre ferme sans contact avec l'un ou l'autre, les seules tentatives réellement orientées vers une solution de ce problème ont toujours fait appel à des moyens partiels et insuffisants pour atteindre le résultat cherché.

La demanderesse a réussi à la suite de nombreux essais réels, à réunir l'ensemble des moyens dont la combinaison est nécessaire pour atteindre ces résultats, et l'objet de la présente demande est donc un bateau rapide à moteur comportant l'ensemble essentiel de ces moyens, à savoir :

1. Une carène dont le fond présente sur la plus grande partie de sa longueur, un profil transversal en forme de voûte écrasée.

2. Ce fond comportant, sur la plus grande partie de sa longueur, une série de redans.

3. La plus grande partie de ces redans présentant sur leur face arrière une ou plusieurs ouvertures dont chacune communique de façon étanche avec l'air atmosphérique, par des varangues creuses et/ou par des tubulures sensiblement verticales.

4. Les deux côtés du bateau étant prolongés vers le bas par une jupe dont la hauteur maximale est sensiblement égale à celle des redans et de préférence sensiblement parallèles entre elles longitudinalement.

A ces moyens essentiels peuvent être combinés

Éventuellement, en restant dans le cadre de l'invention, un ou plusieurs des moyens subsidiaires suivants :

5. La voûte mentionnée en (1) ci-dessus présente un profil transversal pratiquement constant.

6. Les redans mentionnés en (2) ci-dessus sont créés par des décrochements verticaux du profil longitudinal du bateau, et l'ouverture mentionnée en (3) ci-dessus est créée par ce décrochement.

7. Le décrochement mentionné en (6) ci-dessus peut se faire, soit rectilignement suivant un plan perpendiculaire à l'axe longitudinal du bateau, soit suivant toute autre forme ou orientation, pourvu qu'elle soit symétrique à l'axe du bateau.

8. L'ouverture mentionnée en (3), (6) et (7) ci-dessus peut n'occuper qu'une fraction de la dimension transversale du redan, et être subdivisée ou non.

9. La hauteur de ladite ouverture et/ou dudit redan peut être modifiée, cette modification pouvant aller jusqu'à la fermeture totale de ladite ouverture.

10. Dans chaque ouverture peuvent être montées des aubes directrices qui peuvent elles mêmes être réglables en orientation.

11. Le profil longitudinal de la voûte mentionnée en (1) est de préférence rectiligne.

12. Le profil transversal de la voûte mentionnée en (1) peut être subdivisé en deux ou plusieurs arches.

13. La zone arrière de la voûte peut être relevée sur une certaine partie de sa longueur, suivant un profil longitudinal rectiligne, en ligne brisée et/ou curviligne, la voûte pouvant, dans la portion correspondante conserver son profil antérieur ou présenter un profil différent, plus ou moins écrasé en fonction des effets recherchés.

14. Un redan transversal muni d'une ouverture, tel que défini en (2), (3) et (6), (10) ci-dessus détermine l'origine de cette portion de la zone arrière.

0105819

-4-

15. La hauteur des jupes mentionnées en (4) peut être augmentée pour compenser au moins partiellement le relèvement de cette zone arrière.

16. Le (ou les) dispositifs de propulsion sont montés dans la partie avant du bateau, éventuellement de manière orientables.

Les quatres premières caractéristiques conduisent, quand le bateau a amorcé et atteint une certaine vitesse, à provoquer, grâce à la dépression créée par les redans, l'aspiration d'air par les varangues creuses et/ou les tubulures précitées, son déplacement vers l'arrière à travers les fentes des redans par l'avancement du bateau et son maintien sous la coque, sous forme d'une couche mince délimitée par la voûte supérieure et les jupes latérales, cette couche éliminant la surface mouillée précitée. Les autres caractéristiques qui sont facultatives améliorent les effets produits par les quatre premières. Notamment le relèvement de l'arrière évite des bouillonnements et les remous qui se produiraient, à cet emplacement quand cette couche d'air s'échappe, en freinant l'avance de l'embarcation. Enfin, il est préférable que le ou les propulseurs soient écartés de la zone où l'on crée ce phénomène, ce qui privilégie leur position dans la partie avant de la coque.

Il faut noter que la demanderesse a déjà fait des tentatives dans une direction semblable, comme il est décrit dans son brevet français 80.18759 du 29 Août 1980. Toutefois, tous les éléments de la combinaison n'avaient pas été encore réunis, car l'apport de l'air sous la coque exigeait l'utilisation de moyens additionnels de soufflage et de refoulement, et non son aspiration par le simple effet de dépression crée par les redans, qui n'étaient nullement envisagé dans ce brevet antérieur.

Inversement, il faut également signaler que bien que de tels redans aient été décrits dans le brevet US 1.831.697, dans ce dernier cas ils étaient de hauteur variable, et surtout très faible, donc ne pouvaient provoquer d'effet d'aspiration suffisant, de sorte que l'air soufflé sous la coque provenait en fait de l'effet dynamique crée par la vitesse dans une embouchure unique de capture à l'avant de l'embarcation, effet qui a été depuis lors mesuré et trouvé trop faible pour le but recherché. D'ailleurs un ventilateur ou une hélice additionnels étaient prévu à cette époque pour créer un courant positif suffisant. Enfin, le peu d'air ainsi amené sous la coque s'en échappait aussitôt latéralement, la forme du fond ne comportant ni voûte, ni jupe latérale, donc n'avait aucun effet sur le comportement du bateau.

Bien évidemment, le phénomène utilisé dans la présente invention n'ayant jamais été réellement crée et observé, l'importance du relèvement de l'arrière n'avait pu non plus être pris en considération. Or on a constaté que complétant l'effet de la carène en voûte écrasée ce relèvement donnait lieu dans cette zone à un effet de tuyère s'exerçant sur l'air qui, au lieu de s'échapper de manière erratique en créant les bouillonnements et remous qui freinent habituellement les bateaux, se libère vers le haut à l'extérieur au point que l'expérience montre que l'embarcation ne laisse pratiquement pas de sillage ou vague de tableau derrière elle.

Aucun document antérieur ne mentionne une telle combinaison de moyens et les effets qu'elle crée, que l'on peut qualifier de synergétiques, puisqu'il ne s'agit pas d'une addition d'effets individuels déjà connus, puisqu'aucun n'avait pu être effectivement crée individuellement aucun desdits moyens individuels n'ayant été utilisés identiquement à la forme qu'il prend ici dans la présente invention, conjointement avec les autres.

On va maintenant décrire plus en détail l'invention, en se référant à la description suivante, correspondant au dessin annexé sur lequel :

- la figure 1 est une coupe par le plan vertical de symétrie longitudinale d'une coque comportant les caractéristiques de l'invention,

- la figure 2 est une vue schématique de trois quarts dessous de la même coque.

- les figures 3 à 7 sont des coupes transversales de la même coque, prises suivant les plans verticaux III-III à VII-VII des figures 1 et 2,

- les figures 8a et 8b représentent des variantes de la figure 4,

- la figure 9 représente un détail de la figure 5, à plus grande échelle,

- la figure 10 illustre un aménagement supplémentaire optionnel de l'étrave d'un bateau selon l'invention,

- la figure 11 illustre une variante de propulseur utilisé dans l'invention,

- les figures 12 à 15 illustrent schématiquement des variantes de forme des jupes prévus selon l'invention,

- la figure 16 illustre une variante d'aménagement de l'arrière d'un bateau selon l'invention,

- les figures 17 à 20 illustrent diverses variantes d'aménagement du propulseur du bateau selon l'invention,

- les figures 21 et 22 illustrent une autre variante d'aménagement des propulseurs selon l'invention,

- et les figures 23a et 23b illustrent une autre variante encore de propulseur.

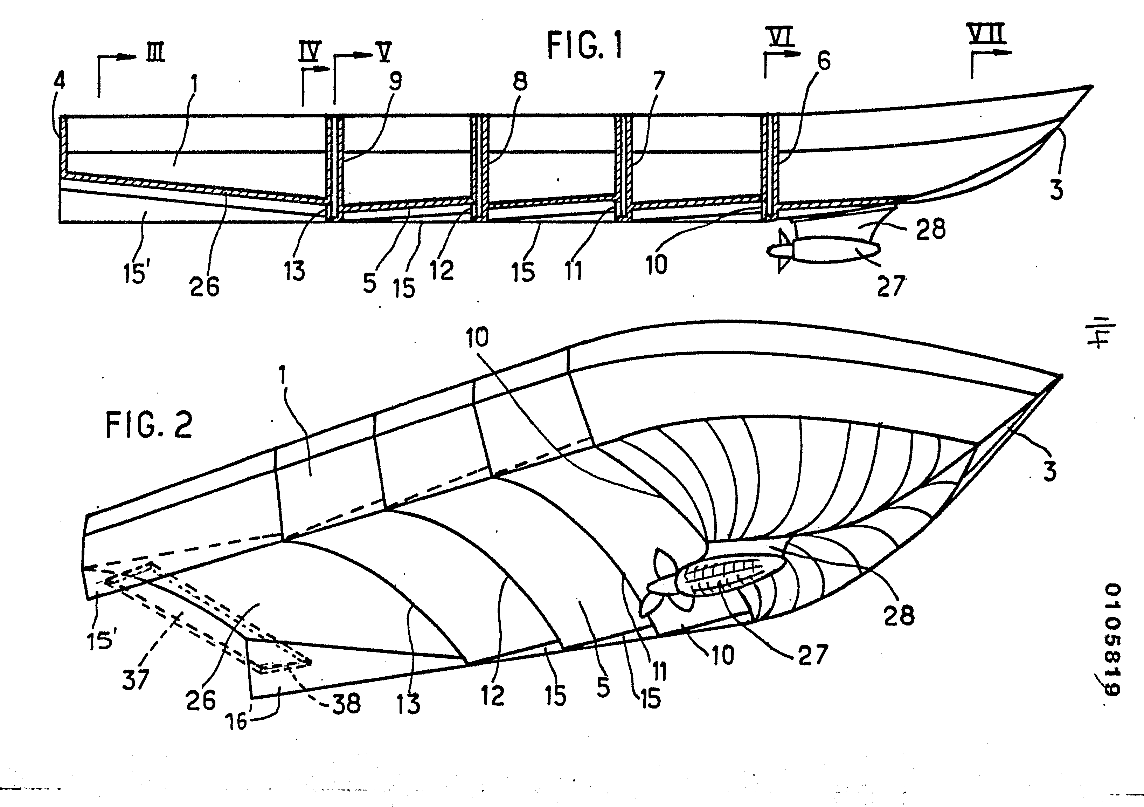

On va d'abord décrire l'invention dans son principe en se référant à l'ensemble des figures 1 à 10, où les mêmes références désignent évidemment les mêmes éléments, bien que les échelles de ces figures soient différentes.

La coque d'un bateau selon l'invention se compose de manière usuelle de deux côtés 1 et 2 épousant les profils successifs des couples transversaux, réunis à l'étrave 3 et au tableau 4, et fermés par un fond 5.

-7-

Selon une première composante essentielle de la combinaison de caractéristiques qui définit l'invention le fond 5 est raccordé avec un certain nombre de couples tels que 6, 7, 8, 9, de manière à créer une série de redans 10, 11,12, 13, le premier de ces couples se situant approximativement vers le premier quart avant du bateau.

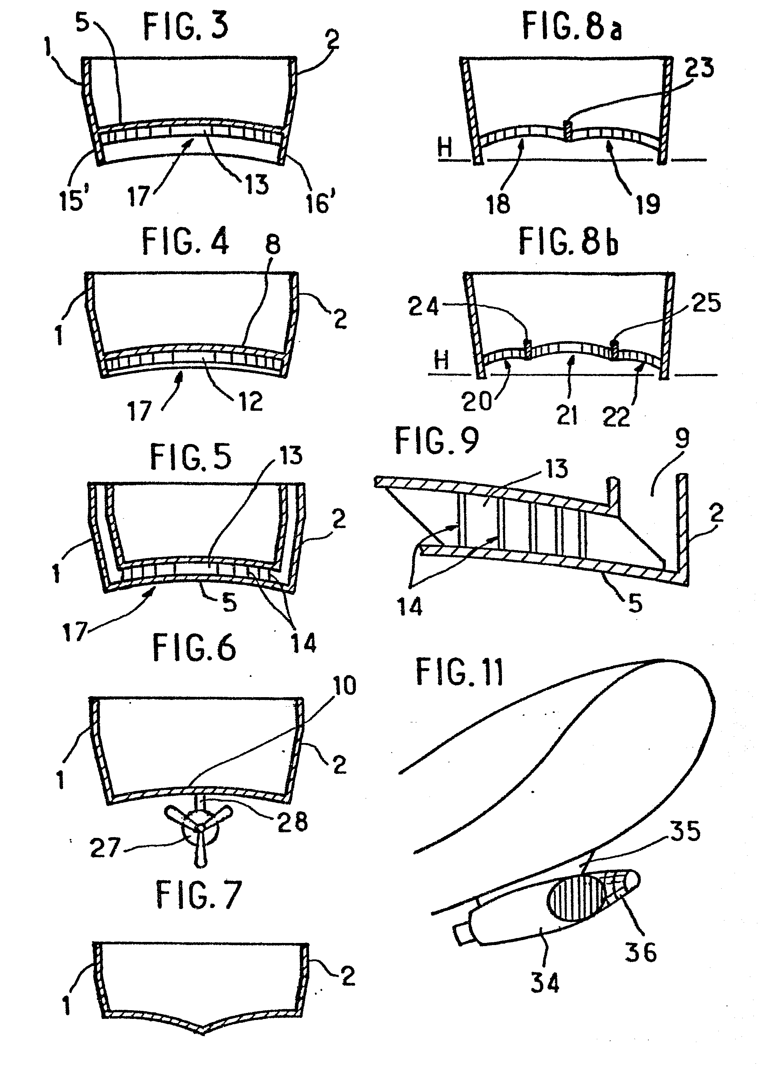

Selon une première composante essentielle, de cette combinaison ces couples constituent des varangues creuses, s'ouvrant à l'air libre vers leur partie supérieure soit directement, soit par des tubulures verticales (non représentées) et formant à leur partie inférieure un caisson dont la face arrière, constituant le redan correspondant par le décalement du fond, présente une ouverture transversale, de préférence équipée d'aubes directrices désignées par 14 notamment sur les figures 5 et 9. Comme on le voit également sur ces figures, ces aubes sont de préférence plus rapprochées vers l'extérieur que vers l'intérieur de la coque.

Selon une troisième composante essentielle de cette combinaison les côtés 1 et 2 se prolongent au delà du niveau du fond 5, de manière à former deux jupes 15 et 16, dont la forme et la fonction seront décrites ci-après plus en détail.

Selon la quatrième composante essentielle de cette combinaison, le fond 5 affecte la forme d'une voûte aplatie ou écrasée 17 qui, notamment dans le cas de bateaux de grandes dimensions peut se subdiviser en deux demi-voûtes 18, 19 (fig. 8a) ou même en trois voûtes partielles 20, 21 22 (fig. 8b) réunies par des quilles ou renforts 23 (fig.8a) ou 24,25 (fig. 8b), étant bien entendu que ces quilles sont toujours situées au-dessus du plan horizontal H du bas des jupes 15 et 16, ce qui distingue donc fondamentalement cette forme du fond de celle dite en "aile de mouette" dont la partie centrale est nettement plus basse que les parties latérales. En d'autres termes le fond 5, dans son ensemble est

-8-

toujours au-dessus du plan de base H des jupes.

Selon une composante facultative de cette combinaison, la zone arrière 26 du fond 5, tout en conservant le même profil transversal en voûte, se relève vers le tableau 4, les jupes 15' et 16' prenant alors une hauteur telle que leur partie inférieure demeure immergée.

A ces jupes 15', 16' peuvent être articulés des safrans à axes verticaux, contribuant à l'orientation du bateau.

Enfin, selon une composante importante de cette combinaison, le propulseur du bateau, représenté ici comme un moteur à hélice 27 porté par un pylone 28, est situé de préférence à l'avant, à savoir peu avant la première varangue creuse 6.

C'est la combinaison fondamentale des quatre premières composantes indispensables qui représente la caractéristique essentielle de l'invention, c'est-à-dire qui seule, et prise dans sa totalité assure les avantages exceptionnels de ce nouveau bateau, pour les raisons et dans les conditions qui vont maintenant être décrites et expliquées plus en détail.

En conditions de marche normale le propulseur 27 fait avancer le bateau de façon usuelle à allure rapide, ce qui amorce un phénomène de dépression à l'arrière de chaque redan 10, 13.

Cette dépression détermine l'aspiration, par les ouvertures des redans et les varangues creuses 6, 9 de l'air situé au-dessus du bateau, et l'installation d'un système aérodynamique dans lequel de l'air prélevé dans l'atmosphère est expulsé par aspiration par l'ouverture cloisonnée par les aubes 14 contre le fond 5, d'où il ne peut s'échapper latéralement en raison des jupes 15,16 de sorte qu'il évacue vers l'arrière, en créant sur toute la surface du fond 5 une lame d'air qui élimine la "surface mouillée" de ce fond. Les autres composantes de l'invention

améliorant cette évacuation.

En effet, la zone arrière du bateau, dans laquelle la forme relevée du fond en 26 donne lieu à un phénomène de tuyère du type venturi, l'air étant éjecté vers le haut, ce qui diminue les remous ou bouillonnements freinant l'avancement du bateau. Le bateau "plane" ainsi sur une lame d'air à quelques centimètres de l'eau, qui, n'exerçant aucun freinage à partir du premier redan, lui permet d'atteindre des performances tout à fait exceptionnelles et inattendues, comme on le précisera plus loin, et qui sont très supérieures à celles de bateaux par ailleurs semblables mais ne possédant pas les caractéristiques de l'invention. Il convient de noter que l'inclinaison optimale du fond 26 sur l'horizontale se situe entre 2 et 10 degrés. C'est pour la clarté du dessin que cet angle est très exagéré sur la figure 1.

Cette constitution essentielle peut bien entendu faire l'objet de nombreuses variantes de réalisation, destinées à améliorer encore les performances du bateau, ou à s'adapter à leur destination.

Ainsi, il peut n'y avoir qu'une seule varangue creuse, qui peut être soit la première, à l'avant, soit la dernière, juste avant le relèvement de l'arrière.

Comme l'épaisseur d'une ouverture ou fente est un des élémenst qui détermine l'importance du débit d'air qui en sort, cette épaisseur peut être constante ou variable pour une même fente et peut également être différente d'une fente à l'autre.

Comme les ouvertures peuvent se présenter sous la forme de fentes, elles pourront par extension être appelées ainsi dans le présent texte. Le bord de ces ouvertures peut avoir une forme particulière en fonction des effets recherchés, de manière à obtenir par exemple une convergence ou une divergence, ou une section constante et/ou une orientation de l'air qui en sort.

Cette épaisseur sera fonction de différents paramètres notamment de l'écartement des fentes entre elles, de leur largeur et de la vitesse du bateau. C'est ainsi que les fentes d'environ 5 cm d'épaisseur réparties tous les 3 mètres donnent des résultats intéressants vers 25,30 noeuds pour une largeur de 2,5 mètres.

En effet l'objet des ouvertures ou fentes est d'engendrer sous la carène un tapis d'air le mieux réparti possible. Comme différents effets, notamment celui de la pente de la voûte écrasée qui varie en fonction de sa position transversale, se conjuguent pour que l'air aspiré se rassemble vers la partie centrale de la voûte, il convient de favoriser l'aspiration d'air dans les parties latérales de la voûte, notamment en y élargissant les fentes ou par la disposition des aubes dans le cas où ces fentes intéressent toute la largeur de la voûte. En tout état de cause la répartition du tapis d'air sous la coque dépend de nombreux éléments dont la vitesse du bateau.

Comme l'ensemble de la carène, le profil transversal du fond de la carène doit obligatoirement être symétrique par rapport au plan vertical passant par l'axe longitudinal du navire.

Dans les zones où le profil transversal de la voûte est en forme écrasée, il est généralement assez proche d'un arc de cercle ou de conique. Il peut toutefois être constitué par deux ou plusieurs segments de droite et/ou de courbes qui se raccordent tangentiellement et/ou avec un angle.

En excluant la jupe, la valeur du rapport entre la hauteur de la voûte et sa largeur est faible, généralement inférieur à 15 % d'excellents résultats sont obtenus avec des rapports de 2 à 6 %. A la limite, cette valeur peut être nulle et le profil de la voûte est alors rectiligne, ce qui en facilite la construction mais présente différents inconvénients.

Dans les zones intéressées, le profil trans-

versal en forme de voûte écrasée peut varier en fonction de sa position. Mis à part le raccordement avec la proue et éventuellement avec la poupe, il est préférable de conserver dans ces zones un profil constant ou pratiquement constant, ce qui facilite la construction et améliore le rendement. Toutefois une modification de la largeur de la voûte en allant de l'avant à l'arrière du bateau apporte des effets particuliers qui peuvent être recherchés dans certaines applications.

Par ailleurs le système à voûtes multiples illustré aux figures 8 a et 8b permet l'extension de cette construction à des bateaux de grande largeur, des renforts 23 ou 24, 25, qui délimitent les voûtes partielles, peuvent jouer le rôle de quilles ou d'amorce de l'étrave, laquelle se présentant alors sous forme usuelle.

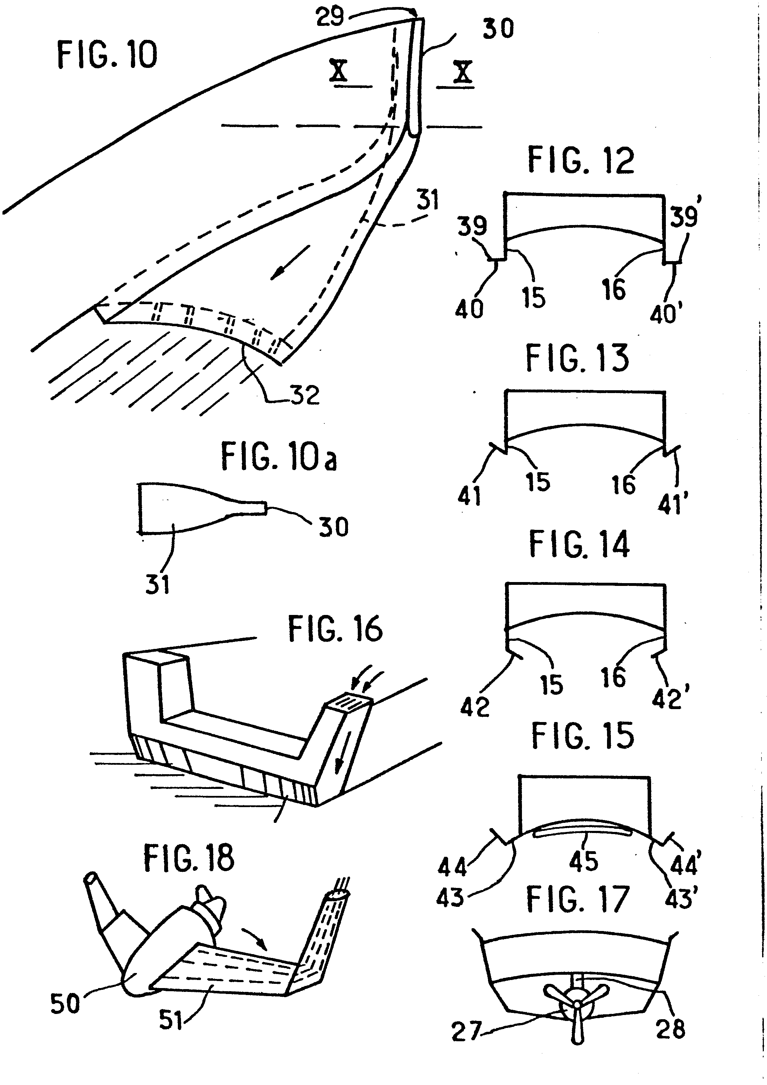

Toutefois, au lieu de cette forme usuelle, l'étrave peut se présenter, comme il est représenté à la figure 10, sous forme d'une prise d'air N.A.C.A. Dans ce cas, l'étrave 29 est creuse, et s'ouvre à l'avant par une fenêtre allongée verticalement 30, s'évasant vers l'arrière en une cellule aplatie 31 venant se terminer à hauteur d'un redan avant 32, dont l'ouverture arrière est pourvue d'aubes 33, analogues aux aubes 14. Dans ce cas l'étrave 29 sert à récupérer la couche limite, à décompresser la vague d'étrave, ou , lorsque le bateau déjauge, à contribuer à la "lubrification" en air de la voûte 5. Il y a là une alimentation dynamique forcée en air et on évite en même temps le freinage dû au refoulement de l'eau par l'avant.

Si on se réfère maintenant au propulseur, on l'a représenté en 27 sous forme d'un moteur à hélice, mais bien entendu il pourrait s'agir d'un autre système, notamment d'un hydrojet, comme illustré en 34 à la figure 11.

Un tel hydrojet devra également être suspen-

-12-

du dans une nacelle à un pylone 35, mais surtout comporter une grille en ogive 36 pour éviter l'aspiration de détritus.

Dans tous les cas, le propulseur pourra être monté sur un pylone mobile verticalement, de manière à assurer son immersion en cas de déjaugeage important du bateau. Un tel déjaugeage peut d'ailleurs être réglé par l'adjonction d'un volet d'orientation en profondeur comme représenté en trait interrompu en 37 sur la figure 2, sous forme d'un plan monté pivotant autour de deux axes horizontaux 38 dans les jupes 15', 16'.

Pour améliorer encore le planage du bateau sur l'eau, sans permettre à l'air éjecté par les fentes 14 de s'échapper latéralement, les jupes 14 et 15 peuvent être complétées par des patins, éventuellement orientables comme l'illustrent les figures 12 à 15 :

- sur la figure 12, ces patins 39, 39' sont horizontaux perpendiculaires aux jupes, et complétés par deux nervures verticales 40, 40', maintenues en immersion et conservant l'orientation du bateau ;

- sur les figures 13 et 14, ces patins 41, 41' ou 42, 42' sont obliques, vers l'extérieur ou vers l'intérieur, respectivement et jouent le double rôle de 39, 40 précédents :

- sur la figure 15, les jupes 43, 43' ne sont plus verticales dans le prolongement des côtés 1, 2 du bateau, mais inclinées, et éventuellement évasées dans le prolongement de la voûte 17, et elles sont complétées par les patins 44, 44', inclinés vers l'extérieur de sorte que les deux couples 43, 44 et 43', 44' jouent le rôle de deux minicoques d'un mini catamaran, glissant sur l'eau et la lame d'air 45 emprisonnée sous la voûte 17.

En fait les jupes peuvent être constituées par les bords extérieurs de la voûte 17, eux-mêmes, pour autant qu'ils soient situés dans le plan H précité.

-13-

Bien qu'il soit bien entendu que les quatre composantes de la combinaison identifiées ci-dessus sont nécessaires et suffisantes pour bénéficier des avantages de l'invention, il est prévu, en restant dans le cadre de celle-ci, de remplacer une de ces composantes subsidiaires, par un élément équivalent dans le cadre d'une destination spécifique.

Ainsi, on a illustré à la figure 16 une variante dans laquelle la tuyère formée par la constitution particulière de l'arrière du bateau est remplacée par un tableau 48 comportant des aubes orientables 49 et dans lesquelles on peut loger des boosters pyrotechniques, destinés à déclencher un démarrage instantané du bateau, notamment à des fins militaires.

Si l'on revient à la constitution et à la disposition du propulseur 27, alors qu'il est représenté à la figure 17 monté dans une nacelle portée par un pylone vertical 28, on a illustré aux figures 18 à 22 une série de variantes pouvant trouver leur application en fonction de la désignation du bateau.

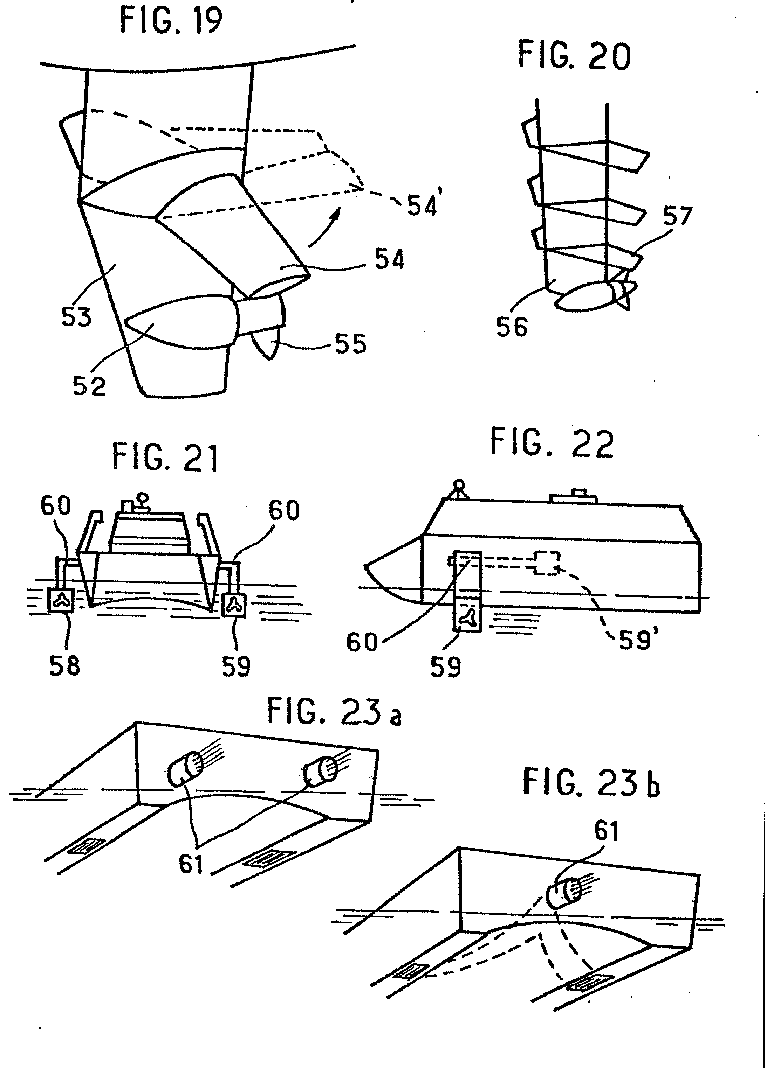

Ainsi, sur la figure 18, le propulseur 50 est monté sur un plan porteur horizontal 51, tandis que sur la figure 19, le propulseur 52 est porté par un pylone vertical 53 sur lequel sont également montés des ailerons 54, qui peuvent eux-mêmes être réglables, ou être à géométrie variable, s'effaçant à grande vitesse en venant prendre la position en trait interrompu 54', de plus faible surface, et jouant au surplus le rôle de plaques de cavitation pour l'hélice 55. De même, comme sur la figure 20, le pylone 56 pourra porter plusieurs étages d'ailerons 57.

Ces ailerons sont réglables en incidence pour obtenir des effets porteurs ou déporteurs permettant de modifier l'assiette du bateau.

Sur les figures 21, 22 , on a représenté un double propulseur 58,59, monté de chaque côté de la coque et basculant autour d'axes 60 de manière à pouvoir être escamotés en cas d'échouage (assèchement complet), ce qui correspond également à une application militaire de ce bateau. Sur les figures 23a, 23b, on a enfin représenté des propulseurs constitués par des hydrojets 61 logés dans les quilles latérales et éjectant leur eau au-dessus de la flottaison, ces éjections peuvent être individuelles (fig. 23a) ou regroupées (fig. 23b).

De même, encore, selon une autre variante, un ou plusieurs propulseurs à hélice peuvent être disposés à l'arrière, de préférence avec des hélices adaptées au fonctionnement en milieu émultionné.

Ainsi qu'il a été exposé au début de cette description, cette combinaison caractéristique d'éléments du bateau est à l'origine de performances encore inégalées. Les exemples concrets suivants permettent d'apprécier ces performances.

Exemple I :

Une vedette expérimentale a été construite selon l'invention. Elle a été soumise à des essais comparatifs éliminant un ou plusieurs des quatre premiers moyens de l'invention. Les données numériques de cette vedette sont les suivantes :

- puissance 110 CV (propulseur Z DRIVE BMVE 130),
- construction en polyester armé de fibres de verre,
- longueur totale : 8,40 mètres,
- longueur totale à la flottaison: 7,60 mètres,
- largeur : 2,0 mètres,
- tirant d'eau au repos : 0,160 mètres,
- poids en ordre de marche avec deux personnes à bord : 1,8 tonnes.

L'essai consiste à mesurer les vitesses dans les deux sens sur un parcours entre balises d'environ 2 Km

-15-

sur mer calme et à faire la moyenne des résultats.

La vitesse de la vedette comportant les quatre premiers moyens de l'invention qui atteint 28 noeuds tombe à 22 noeuds lorsque l'on interdit l'aspiration d'air sous la coque en touchant les varangues creuses.

Une vedette performante classique à coque planante en V (Vé) ayant même dimension et déplacement, mais sans ces aménagements, atteint 26 noeuds, mais avec une puissance installée de 260 CV.

Ce double essai fait ressortir :

1. L'ensemble des aménagements selon l'invention permet un gain de puissance supérieur à 2.

2. L'aspiration d'air est à l'origine d'un gain de rendement important, mais insuffisant à lui seul.

Exemple 2 :

Des essais comparatifs ont été effectués sur divers bateaux rapides à coques performantes, en ramenant tous les résultats à un coefficient correspondant à la puissance exigée pour porter à la vitesse de 30 noeuds une coque d'un déplacement de une tonne, par l'utilisation de formules officielles, notamment celle de l'amirauté française.

Si l'on analyse ces résultats en adoptant le coefficient 100 pour le bateau selon l'invention, on constate que tous les autres bateaux possèdent des coefficients supérieurs, à savoir : 149, 198, 212, 393, et 870. L'indice de puissance du bateau selon l'invention n'a donc été atteint avec aucun des autres bateaux soumis aux essais, ce qui démontre sa supériorité absolue, toutes les autres variables économiques étant prises en considération.

Bien entendu, il faut aussi tenir compte d'autres facteurs, de nature technique : les bateaux selon l'invention combinent les avantages des monocoques, notamment en ce qui concerne la robustesse et la facilité

de construction, ainsi que ceux des catamarans pour leur stabilité transversale. En outre, la lame d'air atténue les chocs de l'eau, tandis que l'éventuelle traction avant apporte une très grande stabilité longitudinale. Il en résulte une très grande stabilité même à vitesse élevée, ce qui favorise le confort de l'équipage et la mise en oeuvre d'armes et/ou d'équipements divers comme les engins de pêche. Comme les bateaux selon l'invention peuvent avoir une largeur beaucoup plus importante que les bateaux classiques sans nuire à leur performance, ils peuvent disposer d'un pont très important, ce qui, joint à leur très grande stabilité, permettra l'appontage des hélicoptères sur des bateaux de longueur réduite.

-17-

REVENDICATIONS.

1.      Bateau rapide à moteur, caractérisé en ce qu'il comporte une carène, dont le fond présente sur la plus grande partie de sa longueur, un profil transversal en forme de voûte écrasée, ce fond comportant sur la plus grande partie de sa longueur une série de redans, la plus grande partie de ces redans présentant sur leur face arrière, une ou plusieurs ouvertures éventuellement subdivisées dont chacune communique de façon étanche avec l'air atmosphérique, les deux côtés du bateau étant prolongés vers le bas par une jupe dont la hauteur est sensiblement égale à celle des redans, et sensiblement parallèles entre elles .

2.      Bateau selon la revendication 1, caractérisé en ce que chaque redan ouvert communique avec l'air atmosphérique par une varangue creuse et /ou par des tubulures.

3.      Bateau selon les revendications 1 et 2, caractérisé en ce que ladite voûte écrasée présente un profil sensiblement constant sur toute la longueur du bateau.

4.      Bateau selon les revendications 1 à 3, caractérisé en ce que ledit profil transversal est subdivisé en deux ou plusieurs arches, réunies par des renforts constamment au-dessus de la partie basse extérieure.

5.      Bateau selon l'une quelconque des revendications 1 à 4, caractérisé en ce que le profil longitudinal de ladite voûte est sensiblement rectiligne.

6.      Bateau selon la revendication 1, caractérisé en ce que lesdits redans sont créés par des décrochements verticaux du profil longitudinal du bateau, ladite ouverture étant crée par ce décrochement.

7.      Bateau selon les revendications 1 et 6, caractérisé en ce que lesdits décrochements sont rectilignes suivant un plan perpendiculaire à l'axe du bateau ou ont une autre forme ou orientation, pourvu qu'elle soit symétrique à l'axe du bateau.

8.        Bateau selon l'une des revendications 6 et 7, caractérisé en ce que ladite ouverture n'occupe qu'une fraction de la dimension transversale du redan et peut être au besoin fractionnée en plusieurs ouvertures séparées.

9.        Bateau selon l'une quelconque des revendications 6 à 8, caractérisé en ce que ladite ouverture et/ou ledit redan peut être réglable, ce réglage pouvant aller jusqu'à la fermeture totale.

10.        Bateau selon l'une quelconque des revendications 6 à 9, caractérisé en ce que des autes directrices sont montées dans lesdites ouvertures, leur orientation pouvant être réglable.

11.        Bateau selon la revendication 1, caractérisé en ce que dans la partie postérieure du bateau la zone arrière de la voûte peut être relevée ou inclinée vers le haut sur une certaine partie de sa longueur, suivant un profil longitudinal rectiligne, en ligne brisée et/ou curvuligne, la voûte, dans la portion correspondante, pouvant conserver son profil antérieur ou présenter un profil différent en fonction des effets recherchés.

12.        Bateau selon la revendication 11, caractérisé en ce qu'un redan détermine l'origine de ladite portion de la zone arrière.

13.        Bateau selon les revendications 11 et 12, caractérisé en ce que la hauteur des jupes est relevée totalement ou en partie pour compenser le relèvement de cette portion de la zone arrière et pour jouer le rôle de dérives et éventuellement inclure un safran de chaque côté.

14.        Bateau selon la revendication 1, caractérisé en ce que le dispositif de propulsion est monté dans les zones avant du bateau et éventuellement de manière orientable.

15.        Bateau selon la revendication 10, caractérisé en ce que lesdites autes sont plus rapprochées vers l'extérieur que vers l'intérieur.

19

16. Bateau selon l'une au moins des revendications précédentes, caractérisé en ce que les jupes se terminent à leurs bords longitudinaux inférieur en totalité ou en partie par des patins facilitant le planage du bateau.

17. Bateau selon la revendication 16, caractérisé en ce que ces patins sont horizontaux, obliques vers l'intérieur, obliques vers l'extérieur, et/ou dans le prolongement de la voûte.

18. Bateau selon une au moins des revendications précédentes, caractérisé en ce que son étrave est du type N.A.C.A. ou similaire et s'ouvre sur une cellule de récupération de la vague d'étrave et débouchant à l'arrière par une ouverture d'éjection de l'air et de l'eau aspirés.

19. Bateau selon la revendication 14, caractérisé en ce que le propulseur est monté sur un pylone vertical, éventuellement mobile verticalement, équipé facultativement d'un ou plusieurs ailerons éventuellement à incidence et/ou géométrie variable, ou encore sur un plan horizontal.

20. Bateau selon l'une des revendications 14 et 19, caractérisé en ce qu'il comporte deux ou plusieurs propulseurs latéraux situés de chaque côté de la coque et escamotables en cas d'échouage.

21. Bateau selon la revendication 1, caractérisé en ce qu'il comporte à l'arrière au moins un propulseur à éjection situé au-dessus de la flottaison, et/ou des boosters pyrotechniques.

0105819

FIG.1

FIG.2

0105819

## FIG.3

## FIG.8a

## FIG.4

## FIG.8b

## FIG.5

## FIG.9

## FIG.6

## FIG.11

## FIG.7

0105819

FIG. 10

29    X    X    30

31

32

FIG. 12

39    39'

39    39'
40    15    16    40'

FIG. 13

41    15    16    41'

FIG. 10a

30
31

FIG. 14

42    15    16    42'

FIG. 16

FIG. 15

44    45    44'
43    43'

FIG. 18

50    51

FIG. 17

27    28

FIG. 19

FIG. 20

FIG. 21

FIG. 22

FIG. 23 a

FIG. 23 b

# RAPPORT DE RECHERCHE EUROPEENNE

Office européen
des brevets

EP 83 44 0049

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 278 559 (STOLK)<br>* Page 2, lignes 8-25; figures 4,7B * | 1-5 | B 63 B 1/38 |
| D,A | US-A-1 831 697 (ZIEGLER)<br>* Page 1, lignes 55-83; figures 1-4 * | 1-5 | |
| A | DE-A-2 642 341 (HEIDTMANN)<br>* Pages 2,3; figures 1-3 * | 1-3 | |
| A | US-A-3 871 318 (CLERK)<br><br>* Colonne 2, lignes 56-67; colonne 3, lignes 1-26; figures 3-5 * | 1-3,5-9,11-13 | |
| A | FR-A-2 464 177 (RHYS-JONES)<br>* Page 2, lignes 16-32; page 3, figures 1-3 * | 1,3,5 | DOMAINES TECHNIQUES RECHERCHES (Int. Cl. ³)<br><br>B 63 B<br>B 63 H |
| A | GB-A-2 042 987 (LUNDKVIST)<br>* Page 1, lignes 109-129; page 2, lignes 1-57; figures 1-4 * | 1 | |
| A | FR-A-1 188 966 (GRAM)<br>* Page 2, colonne de droite, 2ième moitié; figure 1 * | 12 | |
| | -/- | | |

Le présent rapport de recherche a été établi pour toutes les revendications

| Lieu de la recherche<br>LA HAYE | Date d'achèvement de la recherche<br>01-01-1984 | Examinateur<br>VOLLERING J.P.G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82

Office européen
des brevets

**RAPPORT DE RECHERCHE EUROPEENNE**

| | DOCUMENTS CONSIDERES COMME PERTINENTS | | Page 2 |
|---|---|---|---|
| Catégorie | Citation du document avec indication, en cas de besoin, des parties pertinentes | Revendication concernée | CLASSEMENT DE LA DEMANDE (Int. Cl. ³) |
| A | WO-A-8 200 812 (ATELIERS ET CHANTIERS DE LA MANCHE) * Page 12, lignes 9-12; page 13, lignes 2-4; figure 1 * | 14 | |
| A | US-A-3 871 317 (SZPYTMAN) * Colonne 2, lignes 24-67; colonne 3, lignes 1-15; figures 1-3 * | 16-18, 20,21 | |
| A | FR-A-2 460 242 (VALLAS) * Page 2, lignes 18-40; pages 3-4, figures 1-4 * | 19,21 | |
| A | US-A-3 726 246 (WUKOWITZ) * Abrégé; figures * | 21 | |
| A | AU-B- 523 112 (WEST) * Pages 3-4, figures 1,2 * | 21 | DOMAINES TECHNIQUES RECHERCHES (Int. Cl. ³) |

Le présent rapport de recherche a été établi pour toutes les revendications

| Lieu de la recherche LA HAYE | Date d'achèvement de la recherche 01-01-1984 | Examinateur VOLLERING J.P.G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82